# EUROPEAN PATENT APPLICATION

(11) **EP 3 608 754 A1**
(43) Date of publication of application: **12.02.2020**
(21) Application number: 17904854.1
(22) Date of filing: 07.04.2017
(51) Int. Cl.: G06F 3/01

(54) **HAND GESTURE RECOGNITION METHOD AND RELATED DEVICE**

(71) Applicant: Shenzhen Royole Technologies Co., Ltd., Shenzhen, Guangdong 518052 (CN)
(72) Inventor: XIE, Jun, Shenzhen Guangdong 518052 (CN)
(74) Representative: Mewburn Ellis LLP
(86) International application number: PCT/CN2017/079794
(87) International publication number: WO 2018/184233

(57) **Abstract**

A gesture recognition method and related device is provided. The method includes following steps. A current-frame image captured by a camera in a non-visible environment is obtained in response to detecting that an object enters a recognition range (101). The current-frame image is determined whether it contains a gesture by performing feature image detection on the current-frame image (102). If yes, feature points of the gesture in the current-frame image are obtained, and the gesture is traced according to the feature points to obtain gesture tracing data (103). And then the gesture tracing data is transmitted to a head mounted display device (104). The head mounted display device recognizes the gesture according to the positions of the feature points of the gesture to obtain a gesture recognition result (105); and perform a corresponding response action according to the gesture recognition result (106). Gesture recognition can be quickly performed by the method and related device.

## Description

### TECHNICAL FIELD

The present disclosure relates to a field of gesture recognition technologies, and in particular, to a gesture recognition method and related device.

### BACKGROUND

Gesture recognition technology refers to a technology of human-computer interaction by replacing a manipulation device such as a mouse, a keyboard or the like with hand gesture, direction and movement. The current gesture recognition technology mainly includes: a gesture recognition based on sensor hardware and a gesture recognition based on visual information. The gesture recognition based on sensor hardware requires an operator to wear a data glove. When the operator makes different gestures, a gesture and a motion of the current operator can be determined according to the data of sensors on the data glove. This method is not affected by external factors such as light, so its anti-interference performance is better, but the data glove is expensive, and it has a restraining effect on the hand to a certain extent, making the interaction not natural enough. The gesture recognition based on visual information directly uses a hand as an input, collects hand images through one or more visual sensors, and pre-processes and recognizes the collected images, hence the current gesture and motion of the operator can be determined, and the user is provided with a more natural and convenient human-computer interaction mode, which has wider practicality and is also a focus of current industry attention and research.

However, the existing gesture recognition technology based on visual information usually requires complicated mathematical modeling operations on the hand, which causes a large amount of data calculation for pre-processing and recognizing the acquired image, and further leads to a longer time duration for gesture recognition and less efficient. It can be seen that how to provide a fast and efficient gesture recognition solution has become an urgent problem to be solved.

### SUMMARY

Embodiments of the present disclosure disclose a gesture recognition method and related device, which can quickly perform gesture recognition.

A first aspect of the embodiments of the present disclosure discloses a gesture recognition method, including following steps.

A current-frame image captured by a camera in a non-visible environment is obtained in response to detecting that an object enters a recognition range. The current-frame image is determined whether it contains a gesture by performing feature image detection on the current-frame image. If yes, feature points of the gesture in the current-frame image are obtained, and the gesture is traced according to the feature points to obtain gesture tracing data. The gesture tracing data is transmitted to a head mounted display device, so as to cause the head mounted display device to recognize the gesture according to the gesture tracing data and perform a corresponding response action.

A second aspect of the embodiments of the present disclosure discloses a gesture recognition method, including following steps.

Gesture tracing data transmitted by a gesture tracing device is received; the gesture tracing data includes positions of feature points of a gesture; the feature points include reference points and target points. The gesture is recognized according to the positions of the feature points of the gesture to obtain a gesture recognition result. A response action is performed correspondingly according to the gesture recognition result.

A third aspect of the embodiments of the present disclosure discloses a gesture tracing device, including an obtaining module, a determining module, and a transmitting module.

The obtaining module is configured to obtain a current-frame image captured by a camera in a non-visible environment in response to detecting that an object enters a recognition range. The determining module is configured to determine whether the current-frame image contains a gesture by performing feature image detection on the current-frame image. The obtaining module is further configured to obtain feature points of the gesture in the current-frame image and trace the gesture according to the feature points to obtain gesture tracing data if a determination result of the determining module is yes. The transmitting module is configured to transmit the gesture tracing data to a head mounted display device so as to cause the head mounted display device to recognize the gesture according to the gesture tracing data and perform a corresponding response action.

A fourth aspect of the embodiments of the present disclosure discloses a gesture recognition device, including a receiving module, a processing module and a responding module.

The receiving module is configured to receive gesture tracing data transmitted by a gesture tracing device. The gesture tracing data includes positions of feature points of a gesture. The feature points include reference points and target points. The processing module is configured to recognize the gesture according to the positions of the feature points of the gesture to obtain a gesture recognition result. The responding module is configured to perform a response action correspondingly according to the gesture recognition result.

The embodiments of the present disclosure can obtain a current-frame image captured by a camera in a non-visible environment in response to detecting that an object enters a recognition range, determine whether the current-frame image contains a gesture by performing feature image detection on the current-frame image, obtain feature points of the gesture in the current-frame image if the gesture is included, trace the gesture according to the feature points to obtain gesture tracing data, and transmit the gesture tracing data to a head mounted display device. The head mounted display device recognizes the gesture according to the gesture tracing data and performs a corresponding response action. Therefore, the gesture can be recognized quickly.

### BRIEF DESCRIPTION OF THE ACCOMPANYING DRAWINGS

To describe technology solutions in the embodiments of the present disclosure more clearly, the following briefly introduces the accompanying drawings required for describing the embodiments. Obviously, the accompanying drawings in the following description show merely some embodiments of the present disclosure, those of ordinary skilled in the art may also derive other obvious variations based on these accompanying drawings without creative efforts.
FIG. 1 is a schematic flowchart of a gesture recognition method according to one embodiment of the present disclosure;
FIG. 2a is a schematic diagram showing a distribution of a camera and infrared lamps according to one embodiment of the present disclosure;
FIG. 2b is an interface schematic diagram for one gesture recognition according to one embodiment of the present disclosure;
FIG. 2c is an interface schematic diagram for another gesture recognition according to one embodiment of the present disclosure;
FIG. 2d is an interface schematic diagram for another gesture recognition according to one embodiment of the present disclosure;
FIG. 2e is an interface schematic diagram for another gesture recognition according to one embodiment of the present disclosure;
FIG. 3 is a schematic structural diagram of a gesture tracing device according to one embodiment of the present disclosure;
FIG. 4 is a schematic structural diagram of a gesture recognition device according to one embodiment of the present disclosure.

### DETAILED DESCRIPTION OF ILLUSTRATED EMBODIMENTS

The technical solution in the embodiments of the present disclosure will be described clearly and completely hereinafter with reference to the accompanying drawings in the embodiments of the present disclosure. Obviously, the described embodiments are merely some but not all the embodiments of the present disclosure. All other embodiments obtained by a person of ordinary skilled in the art based on the embodiments of the present disclosure without creative efforts shall all fall within the protection scope of the present disclosure.

Embodiments of the present disclosure disclose a gesture recognition method and related device, which can recognize a gesture quickly. The details are described below respectively.

A gesture tracing device and a head mounted display device can be integrated together, or, the gesture tracing device can also be set separately from the head mounted display device.

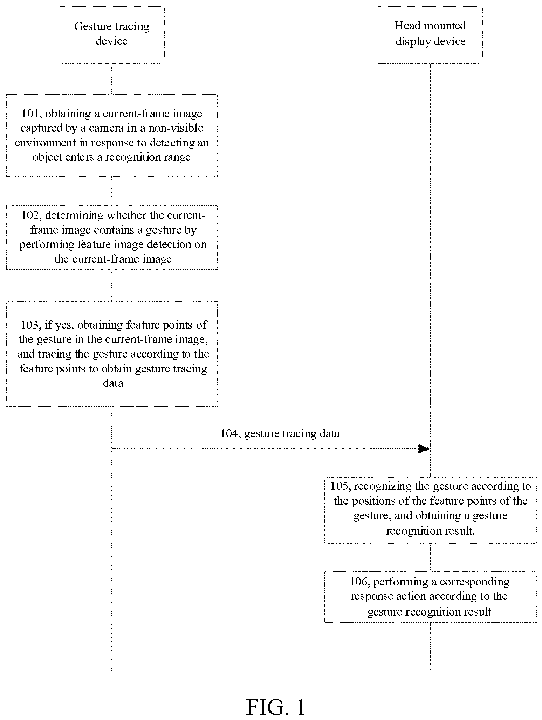

Referring to FIG. 1, a schematic flowchart of a gesture recognition method according to one embodiment of the present disclosure is illustrated. The gesture recognition method described in this embodiment includes following steps.

At block 101, the gesture tracing device obtains a current-frame image captured by a camera in a non-visible environment in response to detecting that an object enters a recognition range.

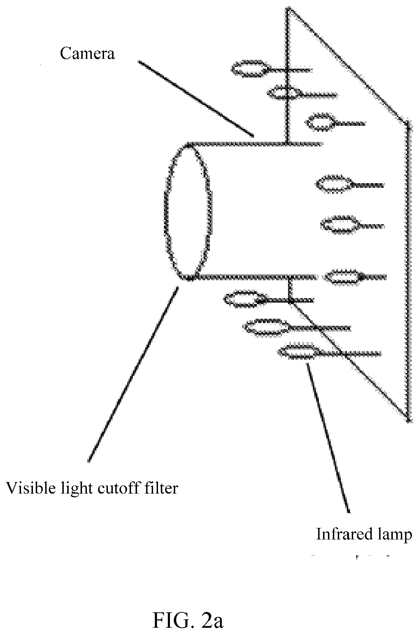

A lens of the camera of the gesture tracing device has a visible light cutoff filter. The visible light cutoff filter is configured to filter visible light and eliminate interference from ambient light. The non-visible environment may be provided by a lamp capable of emitting non-visible light. Specifically, the lamp may be an infrared lamp, an ultraviolet lamp or the like. To take the infrared lamp for an example in the embodiment of the present disclosure, the infrared lamp may be a light emitting diode (LED) or a laser infrared lamp or the like configured to emit infrared light to lighten the object in response to detecting that the object enters a shooting range (i.e., a recognition range) and provide the non-visible environment for the camera, so that the camera can capture the image containing the object. A wavelength of the visible light cutoff filter is the same as a wavelength of the infrared light emitted by the infrared lamp, so that the infrared light emitted by the infrared lamp can be received by the camera through the visible light cutoff filter. As shown in FIG. 2a, the infrared lamps and the camera can be integrated together, and the infrared lamps are evenly distributed around the camera. Of course, the infrared lamps and the camera can also be disposed separately, which is not limited in the embodiments of the present disclosure.

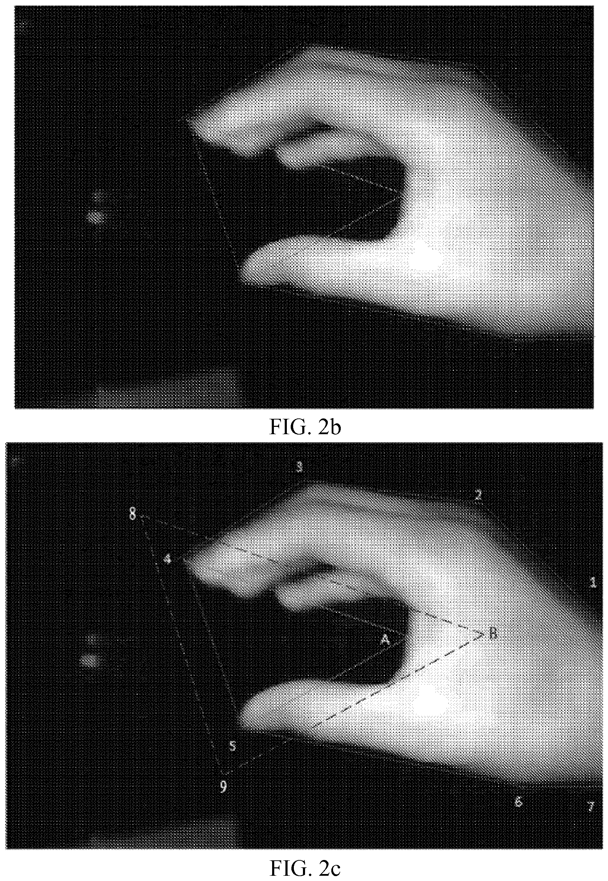

In a specific implementation, the gesture tracing device determines whether an object enters the recognition range according to a brightness of an image captured by the camera. When an overall brightness of the image captured by the camera is improved (for example, the overall brightness reaches a preset first brightness) or the brightness of a partial area of the image captured by the camera is improved (for example, the brightness of the partial area reaches a preset second brightness), the gesture tracing device determines that the object enters the recognition range. As shown in FIG. 2b, when a hand enters the recognition range, due to an irradiation of infrared light emitted by the infrared lamps, the brightness of the area of the hand is greatly increased, and the overall brightness of the image is also improved greatly.

Furthermore, the gesture tracing device can adjust the brightness of the infrared lamps by outputting a control signal (for example, a Pulse Width Modulation wave) to adjust the brightness of the infrared lamps, specifically, increasing the brightness of the infrared lamps, thereby making the object brighter, increasing a brightness difference value between the object and a background, which facilitates subsequent detection and recognition of the object in the image, and then the gesture tracing device controls the camera to capture the current-frame image.

At block 102, the gesture tracing device determines whether the current-frame image contains a gesture by performing feature image detection on the current-frame image, if yes, the block 103 is performed, if not, the brightness of the infrared lamps is restored.

In the embodiments of the present disclosure, the feature image detection refers to a convex hull detection. Reference points (including a first reference point and a second reference point) specifically refer to convex hull vertexes, and target points (including a first target point and a second target point) specifically refer to concave hull points between the adjacent convex hull vertexes.

In the specific implementation, the gesture tracing device may perform pre-processing on the current-frame image, including binarization and contour extraction. That is, the gesture tracing device uses an Otsu algorithm to obtain a brightness threshold, and the area with brightness greater than the brightness threshold is a foreground, hence the foreground can be distinguished from the background of the current-frame image captured by the camera to obtain a binarized image, and extracting a contour from the binarized image to obtain a contour area of the current-frame image. The gesture tracing device then performs feature image detection on the contour area to determine the convex hull vertexes (denoted as the first reference points). Then, the gesture tracing device, for any two adjacent first reference points, obtains distances or an angle between each point located between the two adjacent first reference points on the contour area and the two adjacent first reference points. If there is an identification point existing in the points located between the two adjacent first reference points on the contour area, and the distances between the identification point and the two adjacent first reference points are both greater than or equal to a preset first distance, or, the angle between a line connecting one of the two adjacent first reference points and the identification point and another line connecting the other one of the two adjacent first reference points and the identification point is less than or equal to a preset angle, and the gesture tracing device may determine that the current-frame image contains a gesture input by the user, and then the block 103 is performed. If there is no identification point existing in the points located between the two adjacent first reference points on the contour area, and then the gesture tracing device determines that there is no gesture input by the user in the current-frame image, and can output a control signal to the infrared lamps to adjust the brightness of the infrared lamps, so as to restore the brightness of the infrared lamps to a default value.

It can be understood that if the distances between the identification point and the two adjacent first reference points are greater than or equal to the preset first distance, and the angle between a line connecting one of the two adjacent first reference points and the identification point and another line connecting the other one of the two adjacent first reference points and the identification point is less than or equal to the preset angle, the gesture tracing device can also determine that the current-frame image contains the gesture input by the user.

In some feasible implementations, since the points in the concave hull area of the contour area is not reference points, after the gesture tracing device acquires the contour area of the current-frame image, the concave hull area in the contour area may be removed firstly, and then the feature image detection is performed, which can reduce an amount of data calculation during the feature image detection, which is convenient for speeding up a gesture recognition process.

For example, the current-frame image captured by the camera is shown in FIG. 2c. After the gesture tracing device performs convex hull (i.e., feature image) detection on the contour area of the current-frame image, seven convex hull vertexes (i.e., first reference points), i.e., points 1, 2, 3, 4, 5, 6 and 7 in FIG. 2c, on the contour area can be determined. For any two adjacent convex hull vertexes, taking adjacent convex hull vertexes 4 and 5 as an example, the gesture tracing device obtains distances or an angle of each point located between the convex hull vertexes 4 and 5 on the contour area (i.e., each point on the concave hull area between the convex hull vertexes 4 and 5) and the convex hull vertexes 4 and 5. If there is an identification point A, and the distances between the identification point A and the convex hull vertexes 4 and 5 (ie, the line segments A4, A5) are both greater than or equal to the preset first distance (eg, the straight line segment 45 of the convex hull vertexes 4 and 5), or , the angle □4A5 between a line connecting one of the convex hull vertexes 4 and 5 and the identification point A and another line connecting the other one of the convex hull vertexes 4 and 5 and the identification point A is less than or equal to the preset angle (for example, 45 degrees), the gesture tracing device can then determine that the current-frame image contains the gesture. It can be determined whether the current-frame image contains the gesture input by the user by determining the distances or the angle between the points on the contour area and the two adjacent convex hull vertexes, so that an accurate gesture recognition start signal can be obtained.

At block 103, the gesture tracing device obtains feature points of the gesture in the current-frame image, and traces the gesture according to the feature points to obtain gesture tracing data.

The feature points are key information of the gesture, and the feature points can be configured to recognize the gesture.

In a specific implementation, the gesture tracing device obtains distance sums of each point located between the two adjacent first reference points on the contour area and the two adjacent first reference points, and determines a first target point of which has a corresponding largest distance sum from the points between the two adjacent first reference points on the contour area, and takes the two adjacent first reference points and the first target point as the feature points of the gesture in the current-frame image.

Furthermore, the gesture tracing device determines an interest area for gesture tracing according to the feature points of the gesture in the current-frame image. An area of the interest area is greater than an area enclosed by the feature points (ie, the two adjacent first reference points and the first target point) of the gesture in the current-frame image. In detail, the interest area may be an area enclosed by points respectively a certain distance outwardly away from each of the feature points of the gesture in the current-frame image. The size of the interest area may be preset times (for example, 1.2 times) of the size of the area enclosed by the feature points of the gesture in the current-frame image. The interest area can be used to perform feature image detection for the next-frame image captured by the camera. The feature points of the gesture in the next-frame image is obtained. The gesture tracing data can be generated according to the feature points of the gesture in the current-frame image and the feature points of the gesture in the next-frame image. The gesture tracing data includes the positions of the feature points.

In some possible implementations, the gesture tracing device uses the interest area to perform feature image detection on the next-frame image captured by the camera, and the specific manner of obtaining the feature points of the gesture in the next-frame image may be: for the contour area of the next-frame image captured by the camera, the gesture tracing device can perform feature image detection only on the part of the contour area overlapping with the interest area, and respectively obtains a second target point and two adjacent second reference points closest to the feature points of the gesture in the current-frame image from the second reference points on the contour area of the next-frame image and the points located between any two adjacent second reference points on the contour area of the next-frame image, and takes the second target point and the two adjacent second reference points as the feature points of the gesture in the next-frame image, that is, using the interest area determined in the current-frame image can reduce an area of feature image detection in the next-frame image greatly, and can reduce an amount of data calculation of performing feature image detection on the next-frame image, and can accurately and quickly determine the feature points of the gesture in the next-frame image.

Furthermore, the gesture tracing device updates the interest area by using the feature points of the gesture in the next-frame image to obtain a new interest area. An area of the new interest area is larger than an area enclosed by the feature points (ie, the second target point and the two second adjacent second reference points) of the gesture in the next-frame image. In detail, the area may be an area enclosed by points respectively a certain distance outwardly away from each of the feature points of the gesture in the next-frame image. The size of the interest area may be preset times (for example, 1.2 times) of the size of the area enclosed by the feature points of the gesture in the next-frame image. The interest area can be used to perform feature image detection for the subsequent frame image of the next-frame image captured by the camera, so as to obtain the feature points of the gesture in the subsequent frame image.

For example, the current-frame image captured by the camera is shown in FIG. 2c. For the adjacent convex hull vertexes (ie, first reference points) 4 and 5, the gesture tracing device obtains distance sums between each point located between the convex hull vertexes 4 and 5 on the contour area and the convex hull vertexes 4 and 5 (such as A4+A5), and determines a first concave hull point of which distance sum is the largest among the points located between the convex hull vertexes 4 and 5 on the contour area (ie, first target point) (denoted as A). For another two adjacent convex hull vertexes, if there is no identification point of which distances with the another two adjacent convex hull vertexes are longer than or equal to the preset first distance, or, of which the angle with the other two adjacent convex hull vertexes is less than or equal to the preset angle, then the gesture tracing device can determine that there is no concave hull point located between the other two adjacent convex hull vertexes, and the convex hull vertexes 4 and 5 and the first concave hull point A are taken as the feature points of the gesture in the current-frame image.

Furthermore, the gesture tracing device determines an interest area for performing gesture tracing according to the feature points, which includes the convex vertexes 4, 5 and the first concave hull point A, of the gesture in the current-frame image. An area of the interest area is larger than that of a triangular area Δ4A5 enclosed by the feature points of the gesture in the current-frame image. The interest area may specifically be an area enclosed by points respectively a certain distance outwardly away from each of the feature points of the gesture in the current-frame image. For example, the interest area refers to the triangular area Δ8B9 shown in FIG. 2c. For the contour area of the next-frame image captured by the camera, the gesture tracing device may perform convex hull (ie, feature image) detection only on a part of the contour area overlapping with the triangle area Δ8B9; from the detected convex hull vertexes on the contour area of the next-frame image(ie, the second reference points), and the points located between any two adjacent convex hull vertexes on the contour area of the next-frame image, the gesture tracing device obtains two adjacent convex hull vertexes and the second concave hull point (ie, second reference point) which are nearest to the convex hull vertexes 4, 5 and the first concave hull point A of the current-frame image, and further takes the two adjacent convex hull vertexes and the second concave hull point as the feature points of the gesture of the next-frame image, hence the feature points of the gesture of the next-frame image are determined quickly, and the gesture tracing device can take positions of the feature points (convex vertexes 4, 5 and the first concave hull point A) of the gesture of the current-frame image and positions of the feature points (the adjacent convex vertexes and the second concave hull point) of the gesture of the next-frame image as the gesture tracing data .

It should be noted that the interest area may also be a rectangular area, a circular area or the like larger than the triangular area Δ4A5, which is not limited in the embodiment of the present disclosure.

At block 104, the gesture tracing device transmits the gesture tracing data to a head mounted display device, the head mounted display device receives the gesture tracing data, the gesture tracing data includes positions of the feature points of the gesture.

The feature points specifically include reference points (ie, convex hull vertexes) and target points (ie, concave hull points). The gesture tracing device can be coupled to the head mounted display device by a wired (ie, Universal Serial Bus (USB), etc.) or a wireless (ie, wireless fidelity Wi-Fi, Bluetooth, etc.) way.

In a specific implementation, the gesture tracing device can obtain feature points of the gesture in each frame image captured by the camera in real time, generate gesture tracing data according to the feature points of the gesture in each frame image, and send the gesture tracing data to the head mounted display device. The head mounted display device receives the gesture tracing data, and the gesture tracing data may specifically include positions of the feature points of the gesture.

At block 105, the head mounted display device recognizes the gesture according to the positions of the feature points of the gesture, and obtains a gesture recognition result.

In a specific implementation, the head mounted display device can define correspondences between gesture categories and operation items. The user can implement a shortcut operation on the head mounted display device by inputting different categories of gestures. For example, when the gesture category is pinching fingers, the corresponding operation item is a clicking operation item; when the gesture category is pinching and then moving fingers, the corresponding operation item is a sliding operation item. The head mounted display device may determine a gesture category according to the positions of the feature points of the gesture, and obtain an operation item corresponding to the gesture category and an acting position of the operation item, and further take the operation item and the acting position as the gesture recognition result. By defining the correspondences between the gesture categories and the operation items, an interaction logic of the gesture operation provided by the embodiment of the present disclosure is compatible with a manipulation system with touch as an input.

Furthermore, the head mounted display device can display the acting position on the display screen, which is convenient for the user to adjust the positions of the gesture according to actual needs.

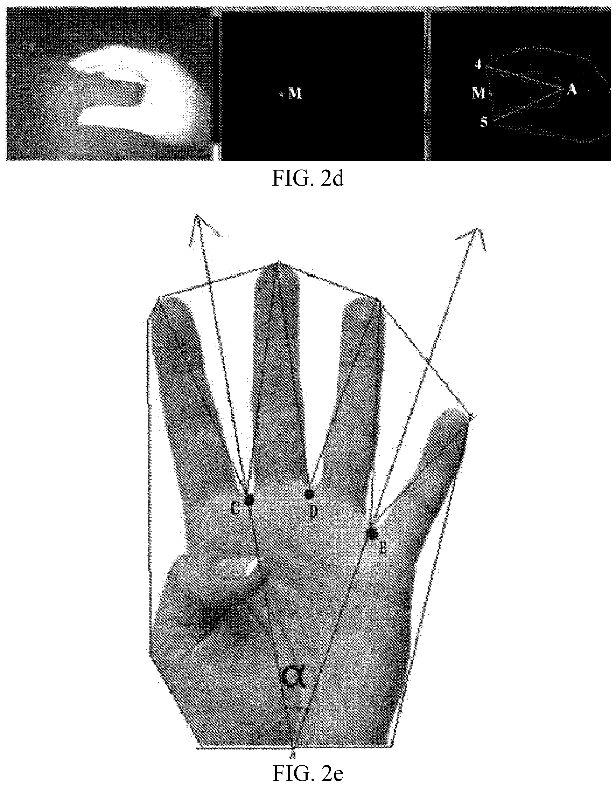

In some possible implementations, if the head mounted display device determines that the two reference points are close to each other, and the distance between the two reference points is less than or equal to the preset second distance, the head mounted display device determines that the gesture category is pinching fingers, determine that the pinching fingers corresponds to the clicking operation item according to the correspondences between the preset gesture categories and the operation items, and further determines a clicking position of the clicking operation item according to a zoom mapping relationship (such as a linear zoom mapping relationship) between the positions of the two reference points, display parameters (such as a screen resolution) of the display screen of the head mounted display device and shooting parameters (such as a photo resolution) of the camera of the gesture tracing device. As shown in FIG. 2d, the user inputs a gesture as shown in a left diagram of FIG. 2d, when the user pinches the fingers, the convex hull vertexes (ie, reference points) 4 and 5 are close to each other, for example, close to a middle point M of a connection line of the convex hull vertexes 4 and 5 as shown in a right diagram of FIG. 2d; if the distance between the convex hull vertexes 4 and 5 is less than or equal to the preset second distance, the head mounted display device determines that the gesture category is pinching fingers, and further determines that the pinching fingers corresponds to the clicking operation item according to the correspondences between the preset gesture categories and the operation items, and further determines a clicking position (such as the middle point M) corresponding to the clicking operation item according to a zoom mapping relationship between the positions of the convex hull vertexes 4 and 5, the screen resolution of the display screen of the head mounted display device and the photo resolution of the camera of the gesture tracing device.

Furthermore, if the distance between the convex hull vertexes 4 and 5 is less than or equal to the preset second distance, and then, the convex hull vertexes 4 and 5 move away from each other causing the distance between the convex hull vertexes 4 and 5 to be greater than the preset second distance, and then the head mounted display device determines that the gesture category corresponds to clicking and then releasing finger.

Furthermore, the head mounted display device may determine a long clicking operation item or a short clicking operation item according to a time duration from user pinching fingers to releasing fingers (ie, the convex vertexes 4 and 5 are moving away from each other); for example, when the time duration is greater than or equal to 2 seconds, the long clicking operation item is determined, otherwise, the short clicking operation item is determined.

In addition, before the user pinches the fingers, the head mounted display device can display a clicking position of the clicking operation item after the fingers are pinched according to a current hand position on the display screen (the middle point M shown in a middle diagram in FIG. 2d). It is convenient for the user to adjust a position of the hand before pinching the fingers according to actual needs.

In some possible implementation manners, if the head mounted display device determines that the distance between the two reference points is close to each other such that the distance between the two reference points is less than or equal to the second distance, and the positions of the feature points of the gesture change synchronously, the head mounted display device determines that the gesture category is pinching and then moving fingers; and determines a sliding operation item corresponding to the pinching and then moving fingers according to the correspondences between the preset gesture categories and the operation items, and further determines a sliding position corresponding to the sliding operation item according to the zoom mapping relationship between the positions of the reference points, the display parameters of the display screen and the shooting parameters of the camera of the gesture tracing device.

In addition, the head mounted display device can display the sliding position on the display screen in real time, which is convenient for the user to adjust a direction of finger moving according to actual needs.

In some feasible implementation manners, the head mounted display device can determine whether an orientation deviation of an angle between a line connecting one of the two adjacent reference points and the target point and another line connecting the other one of the two adjacent reference points and the target point in the gesture tracing data is within a preset angle range, and if yes, the gesture category is determined to be stretching finger, and the quantity of stretching fingers can be determined according to the quantity of target points, therefore, the stretching fingers and the quantity of stretching fingers are taken as the gesture recognition result. As shown in FIG. 2e, the gesture tracing data includes three concave hull points (ie, target points) C, D, and E. When the head mounted display device determines that an orientation deviation α between each of three concave hull points and the two adjacent convex hull vertexes (ie, reference points) is within the preset angle range (for example, 10∼45 degrees), and the gesture category is determined to be stretching fingers, and the quantity of stretching fingers is four (the number of the concave hull points plus 1). The fingers are determined to be stretched vertically upward according to the orientation of the angle between each of the three concave hull points and the two adjacent convex hull vertexes. Therefore, four fingers stretching vertically upward is taken as the gesture recognition result.

It should be noted that the stretching finger described in the embodiments of the present disclosure may specifically include a straightening finger, a stretching finger with a certain bending, and the like.

At block 106, the head mounted display device performs a corresponding response action according to the gesture recognition result.

In the specific implementation, the head mounted display device can obtain the acting position in the gesture recognition result, determine an operation object according to the acting position, and perform the response action corresponding to the operation item on the operation object. For example, when the operation item is the clicking operation item, the head mounted display device opens a multimedia file. when the operation item is the sliding operation item, the head mounted display device controls a playback progress of the multimedia, and the like.

In the embodiments of the present disclosure, the gesture tracing device obtains a current-frame image captured by a camera in a non-visible environment in response to detecting that an object enters a recognition range, and performs feature image detection on the current-frame image to determine whether the current-frame image contains a gesture; if the gesture is contained, the gesture tracing device obtains the feature points of the gesture in the current-frame image, and traces the gesture according to the feature points to obtain gesture tracing data; and then the gesture tracing device transmits the gesture tracing data to the head mounted display device. The head mounted display device recognizes the gesture according to the positions of the feature points of the gesture contained in the gesture tracing data to obtain a gesture recognition result, and further performs a corresponding response according to the gesture recognition result. Therefore, data calculation of gesture recognition can be reduced greatly; the gesture recognition is performed quickly; the interaction logic of the gesture operation is compatible with a manipulation system with touch as an input, and the application range is wide.

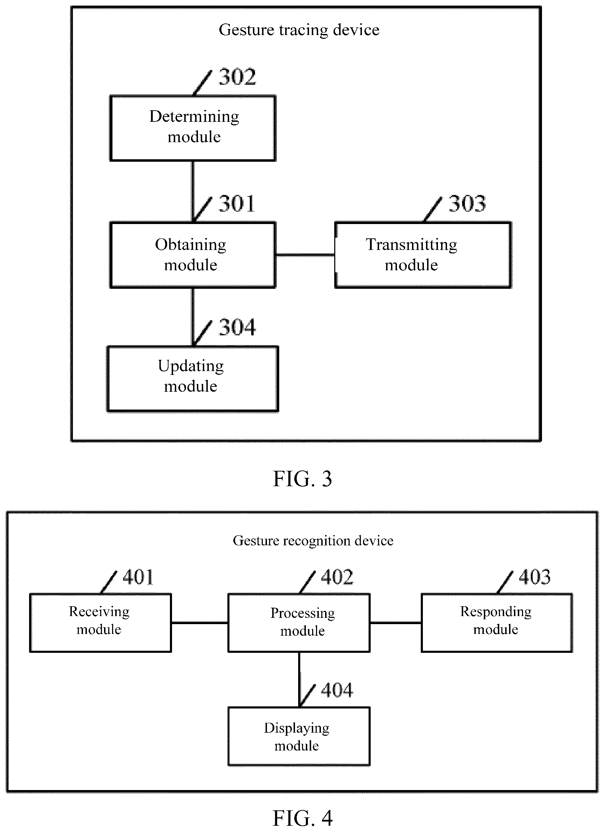

FIG. 3 is a schematic structural diagram of a gesture tracing apparatus according to one embodiment of the present disclosure. The gesture tracing device described in this embodiment includes an obtaining module 301, a determining module 302, and a transmitting module 303.

The obtaining module 301 is configured to obtain a current-frame image captured by a camera in a non-visible environment in response to detecting that an object enters the recognition range.

The determining module 302 is configured to determine whether the current-frame image contains a gesture by performing feature image detection on the current-frame image.

If the determination result of the determining module 302 is yes, the obtaining module 301 is further configured to obtain feature points of the gesture in the current-frame image, and trace the gesture according to the feature points to obtain gesture tracing data.

The transmitting module 303 is configured to transmit the gesture tracing data to the head mounted display device, so that the head mounted display device recognizes the gesture according to the gesture tracing data, and performs a corresponding response action.

In some possible implementations, the determining module 302 is specifically configured to pre-process the current-frame image to obtain a contour area of the current-frame image; perform feature image detection on the contour area of the current-frame image to determine first reference points on the contour area of the current-frame image; for any two adjacent first reference points, the determining module 302 is specifically configured to obtain distances or an angle between each point located between the two adjacent first reference points and the two adjacent first reference points on the contour area.

If there is an identification point existing in points located between the two adjacent first reference points on the contour area, and the distances between the identification point and the two adjacent first reference points are both greater than or equal to a preset first distance, or the angle between the identification point and the two adjacent first reference points is less than or equal to the preset angle, and the current-frame image is determined to contain the gesture.

In some possible implementations, the obtaining module 301 is specifically configured to obtain distance sums between each point located between the two adjacent first reference points on the contour area and the two adjacent first reference points; and determine a first target point having a largest distance sum from the points located between the two adjacent first reference points on the contour area, and further take the first target point and the two adjacent first reference points as the feature points of the gesture in the current-frame image.

In some possible implementations, the obtaining module 301 is specifically configured to determine an interest area for gesture tracing according to the feature points of the gesture in the current-frame image, and perform feature image detection on the next-frame image captured by the camera by using the interest area, and obtain feature points of the gesture in the next-frame image, and generate gesture tracing data according to the feature points of the gesture in the current-frame image and the feature points of the gesture in the next-frame image.

In some possible implementations, the obtaining module 301 is specifically configured to perform feature image detection on the contour area of the next-frame image captured by the camera by using the interest area, and determine second reference points on the contour area of the next-frame image; and obtain a second target point and two adjacent second reference points which are nearest the feature points of the gesture of the current-frame image, from the second reference points on the contour area of the next-frame image and the points located between any two adjacent second reference points on the contour area of the next-frame image, respectively, and take the second target point and two adjacent second reference points as feature points of the gesture in the next-frame image.

In some possible implementations, the device further includes an updating module 304 configured to update the interest area by using feature points of the gesture in the next-frame image.

It is to be understood that the functions of the function modules of the gesture tracing device of the present embodiment may be specifically implemented according to a method in a foregoing method embodiment and its specific implementation process refers to related descriptions of the foregoing method embodiment, no more details here.

In the embodiments of the present disclosure, the obtaining module 301 obtains the current-frame image captured by the camera in the non-visible environment in response to detecting that the object enters the recognition range; the determining module 302 determines whether the current-frame image contains a gesture by performing feature image detection on the current-frame image. If the gesture is contained, the obtaining module 301 obtains the feature points of the gesture in the current-frame image; and traces the gesture according to the feature points to obtain the gesture tracing data; and then the transmitting module 303 transmits the gesture tracing data to the head mounted display device. The head mounted display device recognizes the gesture according to the gesture tracing data, and performs a corresponding response action. Hence, the amount of data calculation during gesture recognition is reduced, and the gesture recognition is recognized quickly.

FIG. 4 is a schematic structural diagram of a gesture recognition device according to one embodiment of the present disclosure. The gesture recognition device described in this embodiment includes a receiving module 401, a processing module 402, and a responding module 403.

The receiving module 401 is configured to receive the gesture tracing data transmitted by the gesture tracing device; the gesture tracing data includes positions of feature points of the gesture; the feature point includes reference points and target points.

The processing module 402 is configured to recognize the gesture according to the positions of the feature points of the gesture to obtain a gesture recognition result.

The responding module 403 is configured to perform a corresponding response action according to the gesture recognition result.

In some possible implementations, the processing module 402 is specifically configured to determine the gesture category according to the positions of the feature points of the gesture, and further obtain an operation item corresponding to the gesture category and an acting position of the operation item; and take the operation item and the acting position as the gesture recognition result.

In some possible implementations, the device further includes a displaying module 404 configured to display the acting position on the display screen.

In some possible implementations, the processing module 402 is specifically configured to determine the gesture category to be pinching fingers if the reference points are close to each other, and the distance between the reference points is less than or equal to the reset second distance.

The processing module 402 is specifically configured to determine that the pinching fingers corresponds to a clicking operation item according to the correspondences between the preset gesture categories and the operation items.

The processing module 402 is specifically configured to determine a clicking position of the clicking operation item according to the positions of the reference points, the display parameters of the display screen, and the shooting parameters of the camera of the gesture tracing device.

In some possible implementations, the processing module 402 is specifically configured to determine that the gesture category is pinching and then moving fingers if the reference points are close to each other such that the distance between the target point and the reference points is less than or equal to the preset second distance, and the positions of the feature points of the gesture change synchronously.

The processing module 402 is specifically configured to determine that the pinching and then moving fingers corresponds to the sliding operation item according to the correspondences between the preset gesture categories and the operation items.

The processing module 402 is specifically configured to determine the sliding position of the sliding operation item according to the positions of the reference points, the display parameters of the display screen, and the shooting parameters of the camera of the gesture tracing device.

In some possible implementations, the processing module 402 is specifically configured to determine the gesture category to be stretching finger if an orientation deviation of an angle between the target point and the two adjacent reference points is within a preset angle range, and further determine a quantity of stretching fingers according to the quantity of the target points, and take the stretching fingers and the quantityof stretching fingers as the gesture recognition result.

It is to be understood that the functions of the functional modules of the gesturing device of the present embodiment may be specifically implemented according to the method in the foregoing method embodiments, and its specific implementation process refers to related description of the foregoing method embodiment, no more details here.

In the embodiments of the present disclosure, the receiving module 401 receives the gesture tracing data transmitted by the gesture tracing device; the gesture tracing data includes the positions of the feature points of the gesture; the processing module 402 recognizes the gesture according to the positions of the feature points of the gesture to obtain the gesture recognition result; the responding module 403 performs a corresponding response action according to the gesture recognition result. The gesture recognition can be performed quickly, and the interaction logic of the gesture operation is compatible with the manipulation system with touch as an input.

It should be noted that, for the foregoing various method embodiments, for the sake of brevity, they are all described as a series of action combinations, but those skilled in the art should understand that the present disclosure is not limited by the described action sequence because certain steps may be performed in other sequences or concurrently in accordance with the present disclosure. In the following, those skilled in the art should also understand that the embodiments described in the specification are all preferred embodiments, and the actions and modules involved are not necessarily required by the present disclosure.A person skilled in the art may understand that all or part of the steps of the foregoing embodiments may be implemented by a program to instruct related hardware. The program may be stored in a computer readable storage medium, and the storage medium may include: Flash disk, Read-Only Memory (ROM), Random Access Memory (RAM), disk or optical disk.

The above is only a preferred embodiment of the present disclosure, and of course, the scope of the present disclosure is not limited thereto, and those skilled in the art can understand all or part of the process of implementing the above embodiments, and according to the present disclosure. The equivalent changes required are still within the scope of the present disclosure.

## Claims

1. A gesture recognition method, comprising:
obtaining a current-frame image captured by a camera in a non-visible environment in response to detecting that an object enters a recognition range;
determining whether the current-frame image contains a gesture by performing feature image detection on the current-frame image;
if yes, obtaining feature points of the gesture in the current-frame image, and tracing the gesture according to the feature points to obtain gesture tracing data;
transmitting the gesture tracing data to a head mounted display device to cause the head mounted display device to recognize the gesture according to the gesture tracing data and perform a corresponding response action.

2. The method according to claim 1, wherein, determining whether the current-frame image contains the gesture by performing feature image detection on the current-frame image, comprises:
pre-processing the current-frame image to obtain a contour area of the current-frame image;
performing the feature image detection on the contour area of the current-frame image, and determining first reference points on the contour area of the current-frame image;
for any two adjacent first reference points, obtaining distances or an angle between each point located between two adjacent first reference points on the contour area and the two adjacent first reference points;
determining that the current-frame image contains the gesture if there is an identification point existing in the points located between the two adjacent first reference points on the contour area, and the distances between the identification point and the two adjacent first reference points are both greater than or equal to a preset first distance, or the angle between a line connecting one of the two adjacent first reference points and the identification point and another line connecting the other one of the two adjacent first reference points and the identification point is less than or equal to a preset angle.

3. The method according to claim 2, wherein, obtaining feature points of the gesture in the current-frame image, comprises:
obtaining distance sums between each point located between the two adjacent first reference points on the contour area and the two adjacent first reference points;
determining a first target point having a largest distance sum from the points located between the two adjacent first reference points on the contour area, and taking the two adjacent first reference points and the first target point as the feature points of the gesture in the current-frame image.

4. The method according to any one of claims 1 to 3, wherein, tracing the gesture according to the feature points to obtain gesture tracing data, comprises:
determining an interest area for gesture tracing according to the feature points of the gesture in the current-frame image;
performing the feature image detection on a next-frame image captured by the camera by using the interest area, and obtaining feature points of a gesture in the next-frame image;
generating gesture tracing data according to the feature points of the gesture in the current-frame image and the feature points of the gesture in the next-frame image.

5. The non-transitory computer-readable storage medium according to claim 4, wherein, performing the feature image detection on the next-frame image captured by the camera by using the interest area, and obtaining feature points of the gesture in the next-frame image, comprises:
performing feature image detection on the contour area of the next-frame image captured by the camera by using the interest area, and determining second reference points on the contour area of the next-frame image;
obtaining a second target point and two adjacent second reference points that are closest to the feature points of the gesture in the current-frame image respectively from the second reference points on the contour area of the next-frame image and points located between any two adjacent second reference points on the contour area of the next-frame image;
taking the second target point and the two adjacent second reference points as the feature points of the gesture in the next-frame image.

6. The method according to claim 4, wherein, the method further comprises:
updating the interest area with the feature points of the gesture in the next-frame image.

7. A gesture recognition method, comprising:
receiving gesture tracing data transmitted by a gesture tracing device, the gesture tracing data comprising positions of feature points of a gesture, the feature points comprising reference points and target point;
recognizing the gesture according to the positions of the feature points of the gesture to obtain a gesture recognition result;
performing a corresponding response action according to the gesture recognition result.

8. The method according to claim 7, wherein, recognizing the gesture according to the positions of the feature points of the gesture to obtain the gesture recognition result, comprises:
determining a gesture category according to the positions of the feature points of the gesture, and obtaining an operation item corresponding to the gesture category and an acting position of the operation item;
taking the operation item and the acting position as the gesture recognition result.

9. The method according to claim 8, wherein, the method further comprises:
displaying the acting position on a display screen.

10. The method according to claim 8, wherein, determining the gesture category according to the positions of the feature points of the gesture, and obtaining the operation item corresponding to the gesture category and the acting position of the operation item, comprises:
determining that the gesture category is pinching fingers if the reference points are close to each other, and the distance between the reference points is less than or equal to a preset second distance;
determining that the pinching fingers corresponds to a clicking operation item according to correspondences between preset gesture categories and operation items;
determining a clicking position of the clicking operation item according to positions of the reference points, display parameters of the display screen, and shooting parameters of a camera of the gesture tracing device.

11. The method according to claim 8, wherein, determining the gesture category according to the positions of the feature points of the gesture, and obtaining the operation item corresponding to the gesture category and the acting position of the operation item, comprises:
determining that the gesture category is pinching and then moving fingers if the distance between the reference points is less than or equal to a preset second distance after the reference points are close to each other, and the positions of the feature points of the gesture change synchronously;
determining that the pinching and then moving fingers corresponds to a sliding operation item according to correspondences between preset gesture categories and operation items;
determining a sliding position of the sliding operation item according to positions of the reference points, display parameters of the display screen, and shooting parameters of a camera of the gesture tracing device.

12. The method according to claim 7, wherein, recognizing the gesture according to the positions of the feature points of the gesture to obtain the gesture recognition result, comprises:
determining that the gesture category is stretching fingers if an orientation deviation of an angle between a line connecting one of the two adjacent reference points and the target point and another line connecting the other one of the two adjacent reference points and the target point is less than or equal to a preset angle range;
determining quantity of stretching fingers to be identical as that of the target points, and taking the stretching fingers and the quantity of stretching fingers as the gesture recognition result.

13. A gesture tracing device, comprising:
an obtaining module, configured to obtain a current-frame image captured by a camera in a non-visible environment in response to detecting that an object enters a recognition range;
a determining module, configured to determine whether the current-frame image contains a gesture by performing feature image detection on the current-frame image;
the obtaining module, further configured to obtain feature points of the gesture in the current-frame image, and trace the gesture according to the feature points to obtain gesture tracing data if a determination result of the determining module is yes;
a transmitting module, configured to transmit the gesture tracing data to a head mounted display device to cause the head mounted display device to recognize the gesture according to the gesture tracing data and perform a corresponding response action.

14. The device according to claim 13, wherein, the determining module is specifically configured to:
perform pre-processing on the current-frame image to obtain a contour area of the current-frame image;
perform the feature image detection on the contour area of the current-frame image, and determine first reference points on the contour area of the current-frame image;
for any two adjacent first reference points, obtain distances or an angle between each point located between two adjacent first reference points on the contour area and the two adjacent first reference points;
determine that the current-frame image contains the gesture if there is an identification point existing in the points located between the two adjacent first reference points on the contour area, and the distances between the identification point and the two adjacent first reference points are both greater than or equal to a preset first distance, or the angle between a line connecting one of the two adjacent first reference points and the identification point and another line connecting the other one of the two adjacent first reference points and the identification point is less than or equal to a preset angle.

15. The device according to claim 14, wherein, the obtaining module is specifically configured to:
obtain distance sums between each point located between the two adjacent first reference points on the contour area and the two adjacent first reference points;
determine a first target point having a largest distance sum from the points located between the two adjacent first reference points on the contour area, and take the two adjacent first reference points and the first target point as the feature points of the gesture in the current-frame image.

16. The device according to any one of claims 13 to 15, wherein, the obtaining module is specifically configured to:
determine an interest area for performing gesture tracing according to the feature points of the gesture in the current-frame image;
perform the feature image detection on a next-frame image captured by the camera by using the interest area, and obtain feature points of a gesture in the next-frame image;
generate gesture tracing data according to the feature points of the gesture in the current-frame image and the feature points of the gesture in the next-frame image.

17. The device according to claim 16, wherein, the obtaining module is specifically configured to:
perform feature image detection on the contour area of the next-frame image captured by the camera by using the interest area, and determine second reference points on the contour area of the next-frame image;
obtain a second target point and two adjacent second reference points that are closest to the feature points of the gesture in the current-frame image respectively from the second reference points on the contour area of the next-frame image and points located between any two adjacent second reference points on the contour area of the next-frame image;
take the second target point and the two adjacent second reference points as the feature points of the gesture in the next-frame image.

18. The device according to claim 16, wherein the device further comprises:
updating the interest area with the feature points of the gesture in the next-frame image.

19. A gesture recognition device, comprising:
a receiving module, configured to receive gesture tracing data transmitted by a gesture tracing device, the gesture tracing data comprising positions of feature points of a gesture, the feature points comprising reference points and target points;
a responding module, configured to recognize a gesture according to the positions of the feature points of the gesture to obtain a gesture recognition result;
perform a corresponding response action according to the gesture recognition result.

20. The device according to claim 19, wherein, the processing module is specifically configured to:
determine a gesture category according to the positions of the feature points of the gesture, and obtain an operation item corresponding to the gesture category and an acting position of the operation item;
take the operation item and the acting position as the gesture recognition result.

21. The device according to claim 20, wherein, the device further comprises:
display the acting position on a display screen.

22. The device according to claim 20, wherein, the processing module is specifically configured to:
determine that the gesture category is pinching fingers if the reference points are close to each other, and the distance between the reference points is less than or equal to a preset second distance;
determine that the pinching fingers corresponds to a clicking operation item according to correspondences between preset gesture categories and the operation items;
determine a clicking position of the clicking operation item according to positions of the reference points, display parameters of the display screen, and shooting parameters of a camera of the gesture tracing device.

23. The device according to claim 20, wherein, the processing module is specifically configured to:
determine that the gesture category is pinching and then moving fingers if the distance between the reference points is less than or equal to a preset second distance after the reference points are close to each other, and the positions of the feature points of the gesture change synchronously;
determine that the pinching and moving fingers corresponds to a sliding operation item according to correspondences between preset gesture categories and operation items;
determine a sliding position of the sliding operation item according to positions of the reference points, display parameters of the display screen, and shooting parameters of a camera of the gesture tracing device.

24. The device according to claim 19, wherein, the processing module is specifically configured to:
determine that the gesture category is stretching fingers if an orientation deviation of an angle between a line connecting one of the two adjacent first reference points and the identification point and another line connecting the other one of the two adjacent first reference points and the identification point is less than or equal to a preset angle;
determine quantity of stretching fingers to be identical as that of the target points, and taking the stretching fingers and the quantity of stretching fingers as the gesture recognition result.
